(19) **Europäisches Patentamt**
**European Patent Office**
**Office européen des brevets**

(11) Veröffentlichungsnummer : **0 454 817 B1**

(12) # EUROPÄISCHE PATENTSCHRIFT

(45) Veröffentlichungstag der Patentschrift :
**01.06.94 Patentblatt 94/22**

(51) Int. Cl.$^5$ : **C04B 7/04, C01B 17/50**

(21) Anmeldenummer : **90916712.4**

(22) Anmeldetag : **16.11.90**

(86) Internationale Anmeldenummer :
**PCT/DE90/00897**

(87) Internationale Veröffentlichungsnummer :
**WO 91/07360 30.05.91 Gazette 91/12**

(54) VERFAHREN ZUR HERSTELLUNG VON ZEMENTKLINKER UND RÜCKGEWINNUNG VON SCHWEFELDIOXID.

(30) Priorität : **20.11.89 DD 334676**
**20.11.89 DD 334675**

(43) Veröffentlichungstag der Anmeldung :
**06.11.91 Patentblatt 91/45**

(45) Bekanntmachung des Hinweises auf die
Patenterteilung :
**01.06.94 Patentblatt 94/22**

(84) Benannte Vertragsstaaten :
**DE FR GB IT**

(56) Entgegenhaltungen :
**EP-A- 0 254 330**
**DE-A-30 370 56**
**US-A- 4 028 126**

(73) Patentinhaber : **WSZ Wolfener Schwefelsäure
und Zement GmbH
Zörbiger Strasse
D-06734 Bitterfeld (DE)**

(72) Erfinder : **HAASE, Rudolf
Wiener Strasse 52
D-4500 Dessau (DE)**

Erfinder : **KOCHMANN, Werner
Krüllsstrasse 4 b
D-4440 Wolfen (DE)**
Erfinder : **KAIN, Christoph
Strasse der Befreiung 41
D-4440 Wolfen (DE)**
Erfinder : **KLUGER, Karl-Heinz
Blumenauerstrasse 8
D-4506 Dessau (DE)**
Erfinder : **EISSLER, Joachim
Ring der Chemiearbeiter 4
D-4413 Sandersdorf (DE)**
Erfinder : **MATSCHINER, Hermann
Schleiermacherstrasse 8
D-4020 Halle (DE)**
Erfinder : **MYOHL, Peter
Linzer Strasse 59
D-4500 Dessau (DE)**
Erfinder : **GAHRMANN, Norbert
Oechelhäuserstrasse 4
D-4500 Dessau (DE)**
Erfinder : **WÄCHTLER, Hans-Jürgen
Kantstrasse 1
D-4500 Dessau (DE)**
Erfinder : **BARTH, Ronald
Block 330/25
D-4090 Halle (DE)**

(74) Vertreter : **Schulte, Jörg, Dipl.-Ing.
Hauptstrasse 2
D-45219 Essen (DE)**

EP 0 454 817 B1

## Beschreibung

Die Erfindung betrifft ein Verfahren zur Herstellung von Zementklinker und zur Rückgewinnung von Schwefeldioxid im Gips-Schwefelsäure-Prozeß.

Die Herstellung von Schwefelsäure und Zementklinker aus Anhydrit, Naturgips, Koks und Zuschlagstoffen, wie Ton, Sand und Eisenoxid, ist bekannt (Z. Angewandte Chemie 38, 794 - 795 (1925); 39, 169 - 174 (1926); Chem. Ing. Techn. 21, 227 - 229 (1949). Auch der Einsatz von Anhydrit durch P-Gips (DD 113 201) oder durch Abprodukte der trockenen Rauchgasentschwefelung (DD 241 891) oder durch P-Gips und Rauchgasentschwefelungsanlagen-Produkte (DE 3622688) ist bekannt.

Bekannt ist auch ein Verfahren, mit dem $SO_2$ aus Abfallschwefelsäure mit Säureteer durch Zuspeisung des durch Vereinigung der Komponenten entstehenden Reaktionsgemisches in den Drehrohrofen des Gips-Schwefelsäure-Prozesses so zurückgewonnen wird, daß damit die $SO_2$-Konzentration der Ofengase aufgebessert werden kann (DD 260 616).

Zahlreiche Verfahren zur Entschwefelung von Rauchgasen sind bekannt geworden, bei denen Abprodukte (REA) unterschiedlicher Zusammensetzung anfallen, welche sich nur teilweise wirtschaftlich verwerten lassen. Insbesondere bei Sprühabsorptionsverfahren (SAV) entstehen $CaSO_3$-haltige Abprodukte, welche nach dem gegenwärtigen Stand der Technik keine Verwendung finden und kostenaufwendig deponiert werden müssen (ZKG 11/88, S. 576 - 582).

Diese Abprodukte können je nach Einbindung des Verfahrens vor oder nach einer Entstaubungsanlage mit oder ohne Asche beladen sein.

Die Aufgabe der Erfindung besteht darin, ein Verfahren zur Herstellung von Zementklinker und zur Rückgewinnung von Schwefeldioxid zu entwickeln, welches mit verringertem Gesamtaufwand im Gips-Schwefelsäure-Verfahren unter Verwendung von bisher schwer verwertbaren Abprodukten erfolgt und bei dem Natur-Anhydrit im Gips-Schwefelsäure-Prozeß als CaO- und $SO_2$-Träger so durch Abprodukte ersetzt werden kann, daß hochwertige Zementklinker und $SO_2$-haltige Gase für die Umsetzung zu $SO_3$ hergestellt werden können.

Erfindungsgemäß wird die Aufgabe dadurch gelöst, daß im Rohmehl als Substitut für Anhydrit $CaSO_3$-haltige Abprodukte aus Rauchgasentschwefelungsanlagen mit einem Massenanteil in % von 5 bis 80 eingesetzt werden.

Als $CaSO_3$-haltige Abprodukte eignen sich besonders Gemische mit einem Massenanteil in % von 21 bis 80 $CaSO_3$ und 5 bis 20 $CaSO_4$. Es hat sich als sehr vorteilhaft erwiesen, wenn das Rohmehl im Einlaufbereich des Drehrohrofens mit Abfallschwefelsäure im Molverhältnis $H_2SO_4$ : $CaSO_3$ von 0,2 bis zu 1,0 besprüht wird. Als Abfallschwefelsäure wird vorzugsweise eine Säure mit 78 bis 100 % $H_2SO_4$ eingesetzt.

Ein Vorteil des erfindungsgemäßen Verfahrens, bei dem qualitativ hochwertige Zementklinker erhalten werden, besteht in einem verringerten Gesamtenergieaufwand für die Stufen Rohmehl-Herstellung und Brennprozeß.

Weiterhin erfolgt durch das Verfahren eine abproduktfreie Nutzung Calciumsulfit-haltiger Abprodukte, wodurch eine Deponie dieser Materialien vermieden wird.

Ein weiterer Vorteil des erfindugnsgemäßen Verfahrens besteht darin, daß durch die Besprühung des Rohmehls mit Abfallschwefelsäure das Defizit an $SO_2$ im REA-Produkt gegenüber Anhydrit zumindest egalisiert wird und damit Gase höheren $SO_2$-Gehaltes erhalten werden, welche in bestehenden Anlagen bei verringertem Energieaufwand zu $SO_3$ umgesetzt werden können. Durch das Verfahren wird somit auch Abfallschwefelsäure abproduktfrei genutzt.

Die Erfindung soll nachstehend an mehreren Beispielen erläutert werden.

Zum Vergleich des erfindungsgemäßen Verfahrens mit der bisher bekannten Verfahrensweise werden Zementklinker und $SO_2$-haltige Gase bei Zudosierung von Abfallschwefelsäure aus den in den folgenden Beispielen beschriebenen Rohmehlmischungen hergestellt.

### Beispiel 1

Rohmehlmischung, bei der 50 % des Anhydrits einer herkömmlichen bekannten Mischung (bestehend aus Anhydrit, Braunkohlenfilterasche (BFA), Sand und Koks) durch ein überwiegend $CaSO_3$ enthaltendes Abprodukt ersetzt wurde.

### Beispiel 2

Rohmehlmischung wie im Beispiel 1, bei der das Anhydrit vollständig durch ein $CaSO_3$-haltiges Abprodukt ersetzt wurde.

Beispiel 3

Rohmehlmischung wie im Beispiel 1, bei der 40 % des Anhydrits durch ein überwiegend $CaSO_3$ enthaltendes Abprodukt ersetzt wurde.

Vergleichsbeispiel

Herkömmliche Rohmehlmischung aus Anhydrit, Braunkohlenfilterasche (BFA), Sand und Koks dem Stand der Technik entsprechend.

Den Rohmehlmischungen wird entsprechend dem Sulfat-Gehalt Reduktionskoks zugemischt. Die chemische Analyse der Rohstoffe und der $CaSO_3$-haltigen Abprodukte ist in Tabelle 1 wiedergegeben.

Tabelle 1    Rohstoffanalyse

| Komponente | $SiO_2$ | $Al_2O_3$ | $Fe_2O_3$ | CaO | Sulfat $SO_4$ | Sulfit $SO_3$ |
|---|---|---|---|---|---|---|
| Anhydrit | – | – | – | 40,4 | 58,8 | – |
| Sand | 95,0 | 1,9 | 0,9 | 0,8 | – | – |
| BFA | 41,4 | 14,8 | 9,7 | 16,9 | – | – |
| Abprodukt 1 | 1,0 | – | – | 50,0 | 1,0 | 27,0 |
| Abprodukt 2 | 10,4 | 5,7 | 8,2 | 36,4 | 2,3 | 21,4 |

Die Rohmehlmischungen hatten für den Klinkerbrand folgende in Tabelle 2 angeführte anteilige Zusammensetzung:

Tabelle 2    Zusammensetzung der Rohmehlmischungen

| Rohmehl-mischung | Anteile in der Rohmehlmischung /%/ | | | | |
|---|---|---|---|---|---|
| | Anhydrit | Sand | BFA | Abprodukt 1 | Abprodukt 2 |
| Beispiel 1 | 39,3 | 3,5 | 18,0 | 39,3 | – |
| Beispiel 2 | – | 3,4 | 19,7 | 76,9 | – |
| Beispiel 3 | 48,5 | 6,0 | – | – | 45,5 |
| Vergleichs-beispiel | 80,0 | 3,6 | 16,1 | – | – |

Die Rohmehlmischung gemäß Beispiel 2 kann ohne Trocken- und Mahlprozeß durch einfaches Mischen hergestellt werden, was energetisch sehr vorteilhaft ist.

Tabelle 3   Festigkeitsentwicklung der aus den Klinkern hergestellten Zemente

| Versuchscharge | Druckfestigkeit /MPa/ | | |
|---|---|---|---|
| | 1 Tag | 3 Tage | 28 Tage |
| 1 | 15,2 | 29,5 | 50,6 |
| 2 | 15,0 | 30,4 | 49,8 |
| Vergleichsbeispiel | 14,8 | 30,8 | 50,4 |

Tabelle 4   Primärenergieaufwand an Braunkohlenbrennstaub für den Klinkerbrand

| Rohmehlmischung | /kJ/kg Klinker/ |
|---|---|
| Beispiel 1 | 8 000 |
| Beispiel 2 | 7 200 |
| Vergleichsbeispiel | 8 800 |

Im folgenden werden Beispiele dargestellt, bei denen im Rohmehleinlaufbereich des Drehrohrofens Abfallschwefelsäure auf die Rohmehlmischung dosiert wird. Daraus ergeben sich die in Tabelle 5 wiedergegebenen $SO_2$-Konzentrationen im Ofengas.

Als Rohmehldurchsatz werden 13 t/h eingestellt.

Die Rohstoffanalysen und die Zusammensetzung der Rohmehlmischungen der Beispiele entsprechen den in Tabelle 1 und Tabelle 2 angegebenen Werten.

**Tabelle 5** Dosierung von Abfallschwefelsäure (AS) zu den Rohmehlmischungen und $SO_2$-Konzentration im Ofengas

| Versuchs- charge | Rohmehl- mischung | Dosierung AS $H_2SO_4 : CaSO_3$ Mol.-Verhält. | % $H_2SO_4$ in AS | Ofengas Vol-% $SO_2$ |
|---|---|---|---|---|
| 1 | Vergleichs- beispiel | – | – | 9,0 |
| 2 | Beispiel 1 | – | – | 7,8 |
| 3 | Beispiel 1 | 1,0 | 98 | 10,3 |
| 4 | Beispiel 2 | – | – | 6,5 |
| 5 | Beispiel 2 | 0,5 | 8,4 | 9,0 |
| 6 | Beispiel 3 | – | – | 8,2 |
| 7 | Beispiel 3 | 0,4 | 78 | 10,8 |

**Tabelle 6** Festigkeitsentwicklung der aus den Klinkern hergestellten Zemente

| Versuchscharge | Druckfestigkeit /MPa/ | | |
|---|---|---|---|
| | 1 Tag | 3 Tage | 28 Tage |
| 1 | 14,8 | 30,8 | 50,4 |
| 2 | 15,2 | 29,5 | 50,6 |
| 3 | 14,7 | 30,1 | 49,9 |
| 4 | 15,0 | 30,4 | 49,8 |
| 5 | 14,8 | 29,7 | 49,9 |
| 6 | 15,3 | 32,0 | 52,9 |
| 7 | 15,0 | 31,5 | 52,8 |

Tabelle 7  Primärenergieaufwand für den Klinkerbrand

| Versuchscharge | /kJ/kg Klinker/ |
|---|---|
| 1 | 8 800 |
| 2 | 8 000 |
| 3 | 8 550 |
| 4 | 7 200 |
| 5 | 7 800 |
| 6 | 7 650 |
| 7 | 8 000 |

**Patentansprüche**

1. Verfahren zur Herstellung von Zementklinker und Rückgewinnung von Schwefeldioxid für die Produktion von Portlandzement und Schwefelsäure im Gips-Schwefelsäure-Prozeß aus Rohmehl, gekennzeichnet dadurch, daß im Rohmehl als Substitut für Anhydrit $CaSO_3$-haltige Abprodukte aus Rauchgasentschwefelungsanlagen mit einem Massenanteil in % von 5 bis 80 eingesetzt werden.

2. Verfahren nach Anspruch 1, gekennzeichnet dadurch, daß als Abprodukt Gemische mit einem Massenanteil in % von 21 bis 80 $CaSO_3$ und 5 bis 20 $CaSO_4$ eingesetzt werden.

3. Verfahren nach den Ansprüchen 1 und 2, gekennzeichnet dadurch, daß das Rohmehl im Einlaufbereich des Drehrohrofens mit Abfallschwefelsäure im Molverhältnis $H_2SO_4 : CaSO_3$ von 0,2 bis zu 1,0 besprüht wird.

4. Verfahren nach den Ansprüchen 1 bis 3, gekennzeichnet dadurch, daß Abfallschwefelsäure mit 78 bis 100 % $H_2SO_4$ zum Einsatz kommt.

**Claims**

1. Method of making cement clinker and recovering sulphur dioxide for the production of Portland cement and sulphuric acid in the gypsum-sulphuric acid process from raw meal, characterized in that, as substitute for anhydrite in the raw meal, $CaSO_3$-containing waste products from flue gas desulphurisation plants are used in a proportion by mass of 5 to 80%.

2. Method according to Claim 1, characterized in that, as a waste product, mixtures having a mass content of 21 to 80% of $CaSO_3$ and 5 to 20% $CaSO_4$ are used.

3. Method according to Claims 1 and 2, characterized in that the raw meal is sprinkled, in the inlet region of the rotary kiln, with waste sulphuric acid in a mol ratio $H_2SO_4:CaSO_3$ of 0.2 to 1.0.

4. Method according to Claims 1 to 3, characterized in that waste sulphuric acid containing 78 to 100% $H_2SO_4$ is used.

**Revendications**

1. Procédé pour la préparation de clinker et la récupération de dioxyde de soufre pour la production de ciment Portland et d'acide sulfurique dans un procédé plâtre/acide sulfurique à partir de farine brute caractérisé en ce que l'on ajoute dans la farine brute comme substituant de l'anhydrit des sous-produits contenant du $CaSO_3$ provenant d'installations de désulfuration dans un rapport massique de 5 à 80%.

2. Procédé selon la revendication 1, caractérisé en ce que l'on utilise comme mélange de sous-produits du $CaSO_3$ dans un rapport massique de 21 à 80% et du $CaSO_4$ dans un rapport massique de 5 à 20%.

3. Procédé selon l'une des revendications 1 ou 2, caractérisé en ce que l'on asperge la farine brute dans la zone d'entrée du four rotatif avec de l'acide sulfurique usagé dans un rapport molaire tel que $H_2SO_4$ : $CaSO_3$ varie de 0,2 à 1,0.

4. Procédé selon l'une des revendications 1 à 3, caractérisé en ce que l'acide sulfurique usagé contient de 78 à 100% de $H_2SO_4$.